# EUROPEAN PATENT APPLICATION

(11) **EP 2 196 623 A1**
(43) Date of publication of application: **16.06.2010**
(21) Application number: 08021382.0
(22) Date of filing: 09.12.2008
(51) Int. Cl.: F01D 5/08, F01D 11/00, F01D 11/02, F02C 7/18

(54) **Gas Turbine**

(71) Applicant: Siemens Aktiengesellschaft, 80333 München (DE)
(72) Inventor: Butler, David, LN5 8JY Lincoln (GB)

(57) **Abstract**

A gas turbine with a stator (19), a rotor (9) and a flow path (14) for hot combustion gas being formed between the stator (19) and the rotor (9), wherein the stator (19) comprises a row of stator vanes (17); the rotor (9) comprises a row of turbine blades (13B) with at least one internal passage for a cooling fluid (F) to flow through the turbine blade (13B), the row of turbine blades (13B) being located upstream of the row of stator vanes (17B); a feed passage system (18, 45, 47) for feeding the cooling fluid (F) to the turbine blades (13B) of the row of turbine blades (13B) is present; and wherein at least some of the stator vanes (17B) have internal passages (18) which are part of the feed passage system (18, 45, 47) for the row of turbine blades (13B) located upstream to the row of stator vanes (17B), such as the feed passage system (18, 45, 47) is sealed (57, 59) with respect to the flow path (14) for hot combustion gas.

## Description

The present invention relates to a gas turbine with a stator, a rotor and a flow path for a combustion gas being formed between the stator and the rotor wherein the stator comprises a row of stator vanes and the rotor comprises a row of turbine blades with at least one internal passage for a cooling fluid to flow through the turbine blade.

Cooling air is required for turbine blades in a gas turbine in order to prevent the turbine blades to be heated by the hot combustion gas to a temperature which may lead to damage of the turbine blade. Typically, the cooling air for the rotor blades is fed through the rotor or through the nozzle located upstream to the turbine blade to be cooled. A gas turbine in which the cooling air is fed through the rotor, mainly through the rotor disc of the turbine blade, is disclosed in US 2008/0112791 A1, and a gas turbine in which the cooling air for a turbine blade is fed through the upstream nozzle is disclosed in US 6,427,448 B1. However, the arrangement for feeding cooling air through the upstream nozzle may give rise to issues relating to the nozzle lifetime. On the other hand, feeding the cooling air through the rotor, e.g. the rotor disc, makes the rotor more complicated and thermally influences the rotor.

Moreover, as also disclosed in US 2008/0112791 A1, it is also possible to feed a fraction of the cooling air for a rotor blade trough the nozzle located downstream to the respective row of turbine blades. The fraction of the cooling air fed through the downstream nozzle is tapped from a location of the compressor at which the pressure is lower than the pressure of the remaining fraction of cooling air fed to said turbine blade.

With respect to this state of the art it is an objective of the present invention to provide an advantageous concept for feeding cooling air to a row of turbine blades.

This objective is solved by a gas turbine as claimed in claim 1. The depending claims contain further developments of the inventive gas turbine.

An inventive gas turbine comprises a stator, a rotor and a flow path for hot combustion gases being formed between the stator and the rotor. The stator comprises a row of stator vanes, and the rotor comprises a row of turbine blades with at least one internal passage for a cooling fluid to flow through the turbine blade. The row of turbine blades is located upstream to the row of stator vanes. A feed passage system for feeding the cooling fluid to the turbine blades of the row of turbine blades is present. At least some of the stator vanes have internal passages which are part of the feed passage system for the row of turbine blades located upstream to the row of stator vanes. According to the invention, the feed passage system is sealed with respect to the flow path for the hot combustion gas. In particular, honeycomb seals and/or labyrinth seals are suitable for sealing the feed passage system. Note, that the number of rows of turbine blades and vanes may be one or higher.

By sealing the feed passage system with respect to the flow path for the hot combustion gas the pressure of the cooling fluid fed through the downstream turbine nozzle to the row of turbine blades can be increased with respect to the pressure of the cooling fluid disclosed in US 2008/0112791 A1. This allows for feeding all the cooling fluid for the upstream row of turbine blades through the turbine nozzle, even if the pressure of the cooling fluid is high enough to implement film cooling of the turbine blades of said row.

The invention is based on the following consideration:

In order to allow thermal expansion of the nozzle components as well as of the rotor components the turbine vanes and blades are arranged with gaps between each other. Hot combustion gas is prevented from entering these gaps by letting a certain amount of cooling air flow through the gaps into the flow path of the hot combustion gas, where the pressure of the air is higher than the pressure of the hot combustion gases.

Controlling the amount of cooling fluid entering the flow path is usually achieved by setting a respective pressure for the cooling fluid flowing through each stage of the turbine. Therefore, in US 2008/0112791 A1 the cooling air led through a nozzle is taken from a location of the compressor at which the pressure is lower than the pressure of the cooling air fed directly to the row of rotor blades which is located upstream to said nozzle. By this measure it is achieved that the pressure of the cooling air introduced into the flow path is, at each stage, suitably adapted to the pressure of the combustion gas flowing through this stage. Feeding a cooling fluid through a nozzle at a pressure suitable for film cooling of an upstream turbine blade would not be easily done in this concept since too much of such a cooling fluid would enter the flow path of the hot combustion gas through the gaps between the nozzle segments, and through gaps between the nozzle and the rotor.

The inventive concept discloses a way for overcoming the mentioned difficulty which allows for feeding all the cooling fluid for a row of turbine blades through a downstream nozzle. By sealing the feed passage system against the flow path the pressure of the cooling air fed to the downstream turbine nozzle can be increased without increasing the amount of the cooling fluid introduced into the flow path of the hot combustion gas. The amount of pressure drop necessary to keep the amount of cooling fluid entering the flow path in an acceptable range can be achieved by suitably choosing the seals, which may be realized as labyrinth seals. The sealing allows for rising the pressure of the cooling fluid led through the downstream nozzle by an amount suitable for realizing film cooling of the turbine blades located upstream of the nozzle.

In contrary thereto, in US 2008/0112791 A1, the pressure of the cooling air fed through the nozzle to the upstream turbine blades is only suitable for cooling the downstream section, of the blades but not for cooling the upstream section which includes the film cooling openings. If the air from the downstream nozzle was used for all the blade the pressure in the blade's upstream section might be too low so that hot combustion gas would enter the film cooling openings which could damage the turbine blade.

The cooling fluid used in the inventive concept may, in particular, be compressor air taken from a downstream section of the compressor like, for example, the compressor exit.

In the inventive gas turbine, the stator vanes as well as the turbine blades may comprise inner platforms forming a radial inner wall section of the flow path for the hot combustion gas with gaps being present between the inner platforms of the stator vanes and the inner platforms of the turbine blades. In this case the feed passage for cooling air comprises feed passage sections formed below the platforms of the stator vanes and below the platforms of the rotor blades. The feed passage sections below the platforms of the stator vanes and below the platforms of the rotor blades are sealed with respect to the gaps between the platforms of the stator vanes and the platforms of the rotor blades. Furthermore, the stator may comprise an inner carrier ring to which the inner platforms of the stator vanes are fixed and which separates the feed passage sections below the platforms of the stator vanes from the feed passage sections below the platforms of the rotor blades. The inner carrier ring than comprises holes for allowing cooling fluid from the feed passage sections below the platforms of the stator vanes to be fed to the feed passage sections below the platforms of the rotor blades.

Further features, properties, and advantages of the present invention will become clear from the following description of an embodiment of the invention in conjunction with the drawings.

Figure 1 shows a gas turbine engine in a highly schematic view.

Figure 2 shows the turbine section of the gas turbine.

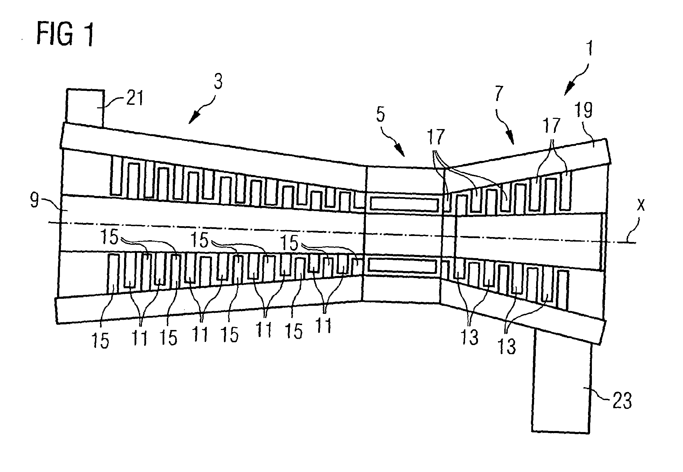

Figure 1 shows, in a highly schematic view, a gas turbine engine 1 comprising a compressor section 3, a combustor section 5 and a turbine section 7. A rotor 9 extends through all sections and carries, in the compressor section 3, rows of compressor blades 11 and, in the turbine section 7, rows of turbine blades 13. Between neighbouring rows of compressor blades 11 and between neighbouring rows of turbine blades 13, rows of compressor vanes 15 and rows of turbine stator vanes 17, respectively, extend from a housing 19 of the gas turbine engine 1 radially inwards towards the rotor 9.

In operation of the gas turbine engine 1 air is taken in through an air inlet 21 of the compressor section 3. The air is compressed and led towards the combustor section 5 by the rotating compressor blades 11. In the combustor section 5 the air is mixed with a gaseous or liquid fuel and the mixture is burnt. Hot and pressurized combustion gas resulting from burning the fuel/air mixture is then fed to the turbine section 7. On its way through the turbine section 7 the hot and pressurized combustion gas transfers momentum to the turbine blades 13 while expanding and cooling, thereby imparting a rotational movement to the rotor 9 that drives the compressor and a consumer, e.g. a generator for producing electrical power or an industrial machine. The rows of turbine stator vanes 17 function as nozzles for guiding the hot and pressurized combustion gas so as to optimize the momentum transfer to the turbine blades 13. Finally, the expanded and cooled combustion gas leaves the turbine section 7 through an exhaust 23.

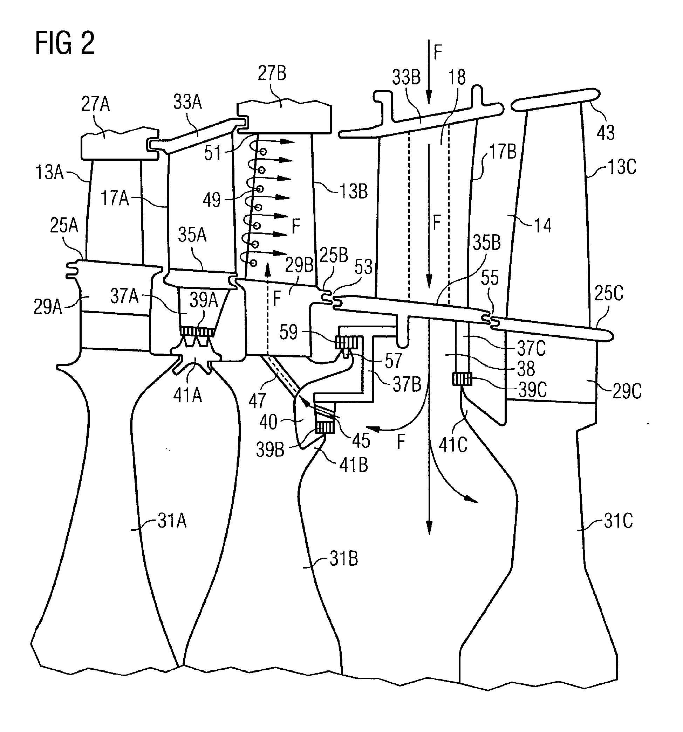

Figure 2 shows a detail of a gas turbine's turbine section. One can see three rows of turbine blades 13A, 13B, 13C and two rows of turbine stator vanes 17A, 17B which are located between the rows of turbine blades 13A, 13B, 13C. Each turbine blade 13A, 13B, 13C comprises a radial inner platform 25A, 25B, 25C. In addition the turbine blades 13A, 13B of the first row of turbine blades and of the second row of turbine blades comprise radial outer platforms 27A, 27B which make them so called shrouded turbine blades. Each turbine blade comprises a root section 29A, 29B, 29C by which it is fixed to a rotor disc 31A, 31B, 31C of the turbine rotor.

The stator vanes 17A, 17B each comprise radial outer platforms 33A, 33B by which the vanes are fixed to the housing 19 of the turbine section. Radial inner platforms 35A, 35B are fixed to carrier rings 37A, 37B, 37C connecting the radial inner ends of turbine vanes 17, which belong to the same row of turbine vanes. The radial inner ends of the carrier rings 37A, 37B, 37C are equipped with honeycomb seals 39A, 39B, 39C which are in opposition to teeth of labyrinth seals 41A, 41B, 41C which are part of, or connected to, the rotor discs 31A, 31B, 31C and rotate with the rotor. Note that depending on the location of the teeth the honeycomb seals may be located at different location of the carrier ring. Even the orientation of the teeth and the seals may differ from the shown embodiment.

The rotor blades 13A, 13B, 13C and the stator vanes 17A, 17B are hollow so as to provide cooling fluid passages for a cooling fluid to flow there through in order to cool the respective vane or blade during operation of the gas turbine. In operation of the gas turbine hot and pressurized combustion gas flows through a flow path 14 which is delimited by the inner and outer platforms of the turbine blades 13A, 13B, 13C and the stator vanes 17A, 17B. Wall sections 43 are fixed to the housing of the turbine section where the turbine blades 13C do not comprise an outer platform. Since the hot and pressurized combustion gas expands and cools when passing the flow path, thereby transferring momentum to rotor blades 13A, 13B, 13C, the pressure of the hot and pressurized combustion gas drops from left (upstream) to right (downstream) in figure 2. Moreover, less cooling is necessary for downstream rows of turbine blades 13 or vanes 17 - e. g. turbine blade 13C - then for upstream rows of turbine blades 13 or vanes 17 - e. g. turbine blade 13A.

Typically, compressor air is used as cooling fluid. In the state of the art compressor air for cooling the downstream rows of blades and vanes is taken from a more upstream part of the compressor than cooling air for cooling the upstream blades and vanes so that the pressure of the cooling air flowing through the downstream blades 13 and vanes 17 is lower than the pressure of the cooling air flowing through the upstream blades 13 and vanes 17.

In the present invention, the cooling air F for cooling the turbine blades of the second row of turbine blades 13B as seen from the left in figure 2, is delivered through internal passages 18 of the vanes 17B of the row of stator vanes located downstream to said row of turbine blades 13B. This means, that in the present invention the pressure of the cooling air flowing through the internal passages in the downstream nozzle stage 17B is as high as the pressure of the cooling air used for the turbine blades 13B located upstream to this nozzle stage.

After passing the internal passages 18 of the stator vanes 17B the cooling air F enters a feed passage section 38 below the platform 35B of the vane 17B and then passes through holes 45 in the carrier ring 37B to a feed passage section 40 below the platform 25B of the turbine blade 13B. The feed passage sections 38, 40 are hollow spaces radially inwards compared to the vanes and blades and are surrounded by the respective rotor discs 31B and 31C, the respective inner platform 35B, a turbine shaft of the rotor 9 and the respective carrier rings 37B and 37C. The cooling air is then led through further through holes 47 in the rotor disc 31B of the second stage of turbine blades 13B into one or more inner cavities of the turbine blades 13B. The cooling air then leaves the inner cavities of the turbine blades 13B through openings, some of which are film cooling openings located close to the upstream edge 51 of the turbine blades 13B. To achieve film cooling the pressure of the cooling air needs to be higher than the pressure of the hot combustion gases at the upstream edge 51 of the turbine blades 13B. However, according to the invention this pressure is higher than the pressure which would conventionally be used for cooling the stator vanes 17B of the downstream nozzle stage. In other words the pressure of the cooling air F fed through the downstream nozzle stage is so high that the leakage of cooling air into the flow path through gaps 53 formed between the inner platforms 35B of the stator vanes 17B and the inner platforms 25B of the upstream turbine blades 13B would be higher than it is desirable in view of the efficiency of the gas turbine.

While the higher pressure is not an issue at the gap 55 located downstream of the nozzle due to honeycomb seal 39C and the labyrinth seal 41C between the carrier ring 37C at the downstream side of the vane 17B and the downstream rotor disc 31C the location of the honeycomb seal 39B and the labyrinth seal 41B between the carrier ring 37B at the upstream side of the vane and the upstream rotor disc 31B would not be able to prevent from a too high leakage through the gap 53. Therefore, the rotor disc 31B is provided with a second labyrinth seal 57 which opposes a second honeycomb seal 59 of the upstream carrier ring 37B. Without this seals the gap 53 would be in full flow communication with the high pressure compressor air delivered through the through holes 45 in the upstream carrier ring 37B, so that too much of this air would enter the flow path of the hot combustion gas. By suitably choosing the additional labyrinth seal 57 and the additional honeycomb seal 59 the amount of leakage through the gap 53 can be set appropriately.

The cooling concept used in the inventive gas turbine allows for feeding all the cooling fluid for a row of turbine blades through the stator vanes located downstream to these turbine blades even at a pressure level which allows film cooling of the turbine blades. By the cooling concept of the inventive gas turbine, issues relating to feeding the cooling air through the upstream nozzle or through the rotor can be overcome.

## Claims

1. A gas turbine with a stator (19), a rotor (9) and a flow path (14) for hot combustion gas being formed between the stator (19) and the rotor (9), wherein
- the stator (19) comprises a row of stator vanes (17);
- the rotor (9) comprises a row of turbine blades (13B) with at least one internal passage for a cooling fluid (F) to flow through the turbine blade (13B), the row of turbine blades (13B) being located upstream of the row of stator vanes (17B);
- a feed passage system (18, 45, 47) for feeding the cooling fluid (F) to the turbine blades (13B) of the row of turbine blades (13B) is present; and wherein
- at least some of the stator vanes (17B) have internal passages (18) which are part of the feed passage system (18, 45, 47) for the row of turbine blades (13B) located upstream to the row of stator vanes (17B),
**characterised in that**
the feed passage system (18, 45, 47) is sealed (57, 59) with respect to the flow path (14) for hot combustion gas.

2. The gas turbine as claimed in claim 1,
**characterised in that**
all the cooling fluid (F) for the row of turbine blades (13B) upstream to the row of stator vanes (17B) is fed through said internal passages (18) of the stator vanes (17B).

3. The gas turbine as claimed in claim 1 or claim 2,
**characterised in that**
the cooling fluid (F) is compressor air taken from a downstream section of the compressor (13).

4. The gas turbine as claimed in claim 3,
**characterised in that**
the cooling fluid (F) is compressor air taken from the compressor exit.

5. The gas turbine as claimed in any of the preceding claims,
**characterised in that**
- the stator vanes (17B) comprise inner platforms (35B) forming a radial inner wall section of the flow path (14) for the hot combustion gas;
- the turbine blades (13B) comprise inner platforms (25B) forming a radial inner wall section of the flow path (14) for the hot combustion gas, which is located upstream to the inner wall section formed by the inner platforms (35) of the stator vanes (17B);
- gaps (53) are present between the inner platforms (35B) of the stator vanes (17B) and the inner platforms (25B) of the turbine blades (13B);
- the feed passage system (18, 45, 47) comprises feed passage sections (38, 40) formed below the platforms (35B) of the stator vanes (17B) and below the platforms (25B) of the rotor blades (13B); and
- the feed passage sections (38, 40) below the platforms (35B) of the stator vanes (17B) and below the platforms (25B) of the rotor blades (13B) are sealed (57, 59) with respect to the gaps (53) between the platforms (35B) of the stator vanes (17B) and the platforms (25B) of the rotor blades (13B).

6. The gas turbine as claimed in claim 5,
**characterised in that**
the stator (9) comprises an inner carrier ring (37B) to which the inner platforms (35B) of the stator vanes (17B) are fixed and which separates feed passage sections (38) below the platforms (35B) of the stator vanes (17B) from feed passage sections (49) below the platforms (25B) of the rotor blades (13B) and which comprises through holes (45) for allowing cooling fluid (F) from the feed passage sections below the platforms (35B) of the stator vanes (17B) to be fed to the feed passage sections below the platforms (25B) of the rotor blades (13B).

7. The gas turbine as claimed in any of the preceding claims,
**characterised in that**
honeycomb seals (59) and/or labyrinth seals (57) are present to seal the feed passage system with respect to the flow path (14) for the hot combustion gas.
